# EUROPÄISCHE PATENTSCHRIFT

(11) **EP 2 156 660 B1**
(45) Veröffentlichungstag und Bekanntmachung des Hinweises auf die Patenterteilung: **13.04.2016**
(21) Anmeldenummer: 07856818.5
(22) Anmeldetag: 17.12.2007
(51) Int. Cl.: H04N 7/173, H04N 21/236, H04N 21/2365, H04N 21/262, H04N 21/643

(54) **VERFAHREN UND SENDEVORRICHTUNG ZUR ÜBERTRAGUNG VON ZAPPING-DATEN**
METHOD AND TRANSMITTING DEVICE FOR TRANSMITTING ZAPPING DATA
PROCÉDÉ ET DISPOSITIF D'ÉMISSION POUR LA TRANSMISSION DE DONNÉES DE CHANGEMENT DE CHAÎNES TÉLÉVISÉES

(30) Priorität: 14.06.2007 DE 102007027433; 17.07.2007 DE 102007033265
(43) Veröffentlichungstag der Anmeldung: 24.02.2010
(73) Patentinhaber: Rohde & Schwarz GmbH & Co. KG, 81671 München (DE)
(72) Erfinder: ZUREK-TERHARDT, Günter, 15566 Schöneiche (DE)
(74) Vertreter: Körfer, Thomas
(86) Internationale Anmeldenummer: PCT/EP2007/011086
(87) Internationale Veröffentlichungsnummer: WO 2008/151657

(56) Entgegenhaltungen:
- EP-A- 1 684 450
- EP-A- 1 793 590
- WO-A-2006/061765

## Beschreibung

Die Erfindung betrifft ein Verfahren und eine Sendevorrichtung zur Übertragung von Zapping-Daten, d.h. von Kanalwechsel-Daten für den Kanalwechsel z.B. eines Fernsehempfängers.

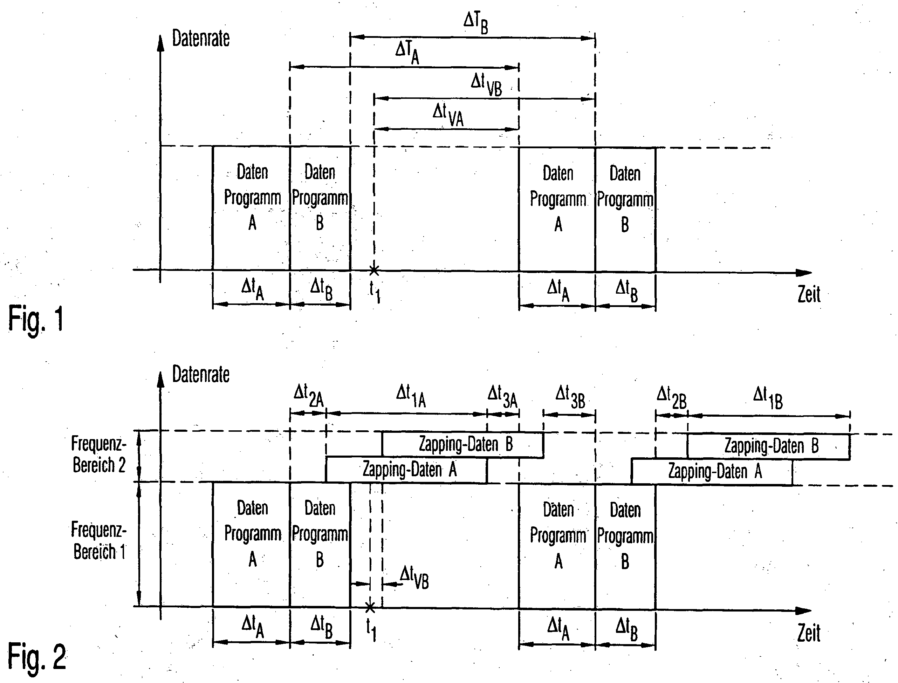

Im europäischen Digital-Video-Broadcast-Handheld-Übertragungs-Standard (DVB-H-Übertragungs-Standard) wie auch im dazu korrespondierenden amerikanischen Übertragungsstandard A-VSB des amerikanischen digitalen Fernsehstandards ATSC werden im empfangenden Mobilfunkgerät die zu einem Programm bzw. Service gehörigen Übertragungsdaten jeweils nur in periodisch angeordneten Burstintervallen gemäß Fig. 1 übertragen. Zwischen den zum jeweils empfangenen Programm bzw. Service gehörigen Burst-intervallen Δ*t_{A}* bzw. Δ*t_{ß}* während der Zeitintervale Δ*T_{A}* bzw. Δ*T_{B}* werden die zum Empfang gehörigen Baugruppen des Mobilfunkgeräts ausgeschaltet und somit der Energiever-brauch des Mobilfunkgeräts minimiert.

Führt der Halter des Mobilfunkgeräts gemäß Fig. 1 zum Zeitpunkt t₁ einen Programm- bzw. Service-Wechsel oder eine erste Programm- bzw. Serviceauswahl durch, so tritt der Empfang des Programms bzw. Services beim Wechsel bzw. bei der Erstauswahl aufgrund der Periodizität des zum jeweiligen Programm bzw. Service gehörigen Burstintervalls um die Verzögerungszeit Δ*t_{VA}* bzw. Δ*t_{VB}* verzögert ein. In den Verzögerungszeiten Δ*t_{VA}* bzw. Δ*t_{VB}* ist kein Empfang des jeweils ausgewählten Programms A bzw. B möglich. Die Verzögerungszeiten Δ*t_{VA}* bzw. Δ*t_{VB}* müssen überbrückt werden.

Zur Überbrückung der Verzögerung insbesondere beim Programm- bzw. Service-Wechsel werden dem Halter des Mobilfunkgeräts sogenannte Zapping-Daten (Kanalwechsel-Daten) angeboten. Diese Zapping-Daten können entweder bestimmte Service-Informationen oder Programm-Daten mit reduzierten Programminhalten sein. Zapping-Daten werden bevorzugt in Audio-Kanälen zur Übertragung von Audioinhalten mit verringerter Bandbreite benutzt. In der WO 2006/031925 A2 werden derartige Zapping-Daten vorab übertragen, im Mobilfunkgerät zwischengespeichert und bei Bedarf im Falle eines Programm- oder Service-Wechsels - Zapping - dem Halter des Mobilfunkgeräts angezeigt. Nachteilig an einem derartigen Verfahren zur Übertragung von Zapping-Daten ist das Vorhalten eines Zwischenspeichers im Mobilfunkgerät für Zapping-Daten.

Die EP 1 793 590 A offenbart eine Übertragung von Zapping-Daten in einem vom ersten Frequenzbereich der einzelnen Bursts unterschiedlichen zweiten Frequenzbereich. Die Zapping-Daten werden aber in einer ersten Ausführungsform kontinuierlich über die gesamte Übertragungszeit übertragen. In einer anderen Ausführungsform werden die Zapping-Daten sowohl in Zeitbereichen zwischen den zum jeweiligen Programm gehörigen Burst-Intervallen als auch in Zeitbereichen übertragen, die parallel zu den zum jeweiligen Programm gehörigen Burst-Intervallen liegen.

Die EP 1 684 450 A2 offenbart Zapping-Daten, die in einem Frequenzbereich übertragen werden, der unterschiedlich zum Frequenzbereich ist, in dem die zu den einzelnen Programmen jeweils gehörigen Nutzdaten übertragen werden. Die Zapping-Daten werden aber kontinuierlich über die gesamte Übertragungszeit und folglich nicht einzig in den Zeitintervallen übertragen, die zwischen den zu den einzelnen Programmen jeweils gehörigen Burst-Intervallen liegen.

Aufgabe der Erfindung ist es deshalb, ein Verfahren und eine Sendevorrichtung zum Übertragen von Zapping-Daten ohne Zwischenspeicherung der Zapping-Daten im Mobilfunkgerät zu schaffen.

Die Aufgabe wird bezüglich des Verfahrens durch die Merkmale des Anspruchs 1 und bezüglich der Sendevorrichtung durch die Merkmale des Anspruchs 5 gelöst. Die abhängigen Ansprüche enthalten vorteilhafte Weiterbildungen.

Erfindungsgemäß werden die Zapping-Daten in einer von der ersten Datenrate mit den in einzelnen Burstintervallen übertragenen Programm- bzw. Service-Daten unterschiedlichen zweiten Datenrate übertragen. Da die Zapping-Daten Programm- bzw. Service-Daten mit reduzierten Programm- bzw. Service-Inhalten darstellen, weist die zweite Datenrate eine niedrigere Bandbreite als die erste Datenrate auf.

In einer ersten Ausführungsform des erfindungsgemäßen Verfahrens werden die Zapping-Daten kontinuierlich in einem ersten Zeitintervall zwischen zwei aufeinander folgenden Burstintervallen übertragen. Hierbei kann das erste Zeitintervall verzögert um ein zweites Zeitintervall gegenüber dem Ende des vorausgehenden Burstintervall beginnen und vorzeitig um ein drittes Zeitintervall gegenüber dem Beginn des nachfolgenden Burstintervalls enden.

In einer zweiten Ausführungsform des erfindungsgemäßen Verfahrens werden die Zapping-Daten diskontinuierlich in mehreren zeitlich beabstandeten vierten Zeitintervallen zwischen zwei aufeinander folgenden Burstintervallen übertragen.

In einer dritten Ausführungsform des erfindungsgemäßen Verfahrens werden die Zapping-Daten kontinuierlich über die gesamte Zeit - also auch während der einzelnen Burstintervalle - übertragen.

Die drei Ausführungsformen des erfindungsgemäßen Verfahrens zur Übertragung von Zapping-Daten werden im Folgenden im Detail anhand der Figuren der Zeichnung erläutert. Die Figuren der Zeichnung zeigen:
- Fig. 1: ein übliches Datenrate-Zeit-Diagramm mit Programmdaten in einem DVB-H-Übertragungssystem,
- Fig. 2: ein Datenrate-Zeit-Diagramm mit Programm- und Zapping-Daten in einer ersten Ausführungsform des erfindungsgemäßen Verfahrens zur Übertragung von Zapping-Daten und
- Fig. 3: ein Datenrate-Zeit-Diagramm mit Programm- und Zapping-Daten in einer zweiten Ausführungsform des erfindungsgemäßen Verfahrens zur Übertragung von Zapping-Daten.
- Fig. 4: ein Datenrate-Zeit-Diagramm mit Programm- und Zapping-Daten in einer dritten Ausführungsform des erfindungsgemäßen Verfahrens zur Übertragung von Zapping-Daten.

In der ersten Ausführungsform des erfindungsgemäßen Verfahrens zur Übertragung von Zapping-Daten wird bei einer Erstauswahl bzw. bei einem Programmwechsel zum Zeitpunkt t₁ gemäß Fig. 2 im Fall der Erstauwahl des Programms A bzw. des Wechsels zum Programm A das Programm A mit Zapping-Daten A, die in einer zweiten Datenrate in einem ersten Zeitintervall Δ*t*_{1*A*} zwischen zwei Burstintervallen Δ*t_{A}* übertragenen Prögramm-Daten des Programms A mit reduzierten Programminhalten darstellen, dem Halter des Mobilfunkgeräts angezeigt. Es tritt folglich keine Verzögerungszeit Δ*t_{VA}* auf.

Im Fall der Erstauswahl des Programms B bzw. des Wechsels zum Programm B wird dem Halter des Mobilfunkgeräts das Programm B mit Zapping-Daten B, die Programm-Daten des Programms B mit reduzierten Programminhalten darstellen, angezeigt. Die Verzögerungszeit Δ*t_{VB}* reduziert sich gegenüber einer Programmübertragung in einem DVB-H- oder ATSC-Übertragungssystem nach dem Stand der Technik gemäß Fig. 1, da Zapping-Daten B in der zweiten Datenrate in einem ersten Zeitintervall Δ*t_{1B}* zwischen zwei Burstintervallen Δ*t_{B}* übertragen werden.

Die ersten Zeitintervalle Δ*t*_{1*A*} bzw. Δ*t*_{1*B'*} in denen jeweils Zapping-Daten A bzw. B übertragen werden, können gemäß Fig. 2 gegenüber dem Ende des jeweils vorausgehenden Burstintervalle zur Übertragung von Programmdaten A bzw. B um ein zweites Zeitintervall Δ*t*_{2*A*} bzw. Δ*t*_{2*B*} verzögert sein und gegenüber dem Beginn des jeweils nachfolgenden Burstintervalls um ein drittes Zeitintervall Δ*t*_{1*A*} bzw. Δ*t*_{3*B*} vorzeitig enden.

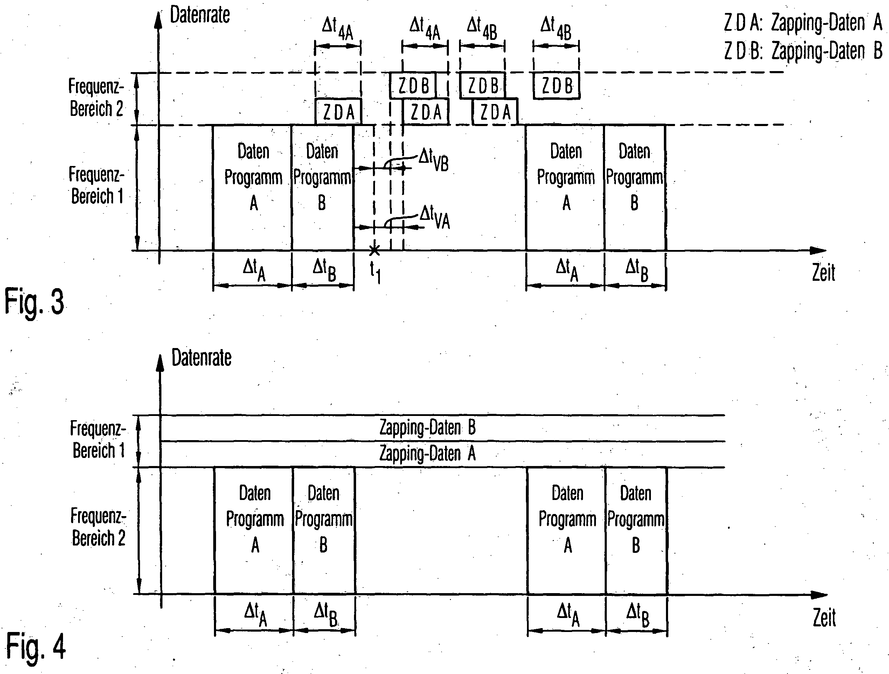

In der zweiten Ausführungsform des erfindungsgemäßen Verfahrens zur Übertragung von Zapping-Daten werden die Zapping-Daten zu Programm A bzw. B zwischen zwei aufeinander folgenden Burstintervallen der Programme A bzw. B in mehreren jeweils zeitlich beabstandeten vierten Zeitintervallen Δ*t*_{4*A*} bzw. Δ*t*_{4*B*} übertragen. Die einzelnen vierten Zeitintervalle Δ*t*_{4*A*} bzw. Δ*t*_{4*B*} können, wie in Fig. 3 dargestellt ist, periodisch beabstandet sein oder auch in unregelmäßigen Zeitabständen beabstandet sein. Auch die Länge der einzelnen aufeinander folgenden vierten Zeitintervalle Δ*t*_{4*A*} bzw. Δ*t*_{4*B*} muß nicht zwingend konstant sein.

Je nach Lage des Zeitpunkts t₁ der Erstauswahl des jeweiligen Programms A bzw. B oder des Wechsels zum Programm A bzw. B relativ zum jeweiligen vierten Zeitintervall Δ*t*_{4*A*} bzw. Δ*t*_{4*B*} ergeben sich Verzögerungszeiten Δ*t_{VA}* bzw. Δ*t_{VB},* die gegenüber der bisher üblichen Übertragung in einem DVB-H- oder ATSC-Übertragungssystem gemäß Fig. 1 reduziert sind. Gegenüber der ersten Ausführungsform des erfindungsgemäßen Verfahrens können in der zweiten Ausführungsform des erfindungsgemäßen Verfahrens aufgrund der diskontinuierlichen Verteilung der einzelnen vierten Zeitintervalle Δ*t*_{4*A*} bzw. Δ*t*_{4*A*} innerhalb zweier aufeinander folgender Burstintervalle u.U. längere Verzögerungszeiten Δ*t*_{1*A*} bzw. Δ*t*_{4*B*} auftreten.

In der dritten Ausführungsform des erfindungsgemäßen Verfahrens zur Übertragung von Zapping-Daten werden die Zapping-Daten zu Programm A bzw. B gemäß Fig. 4 kontinuierlich über die ganze Zeit übertragen. Auf diese Weise kann der Benutzer auch während der Burstintervalle Δ*t_{A}* oder Δ*t_{B}* ohne Auswahl der zu Programm A oder B gehörigen Programm- bzw. Service-Daten einzig auf die zu Programm A oder B gehörigen Zapping-Daten zugreifen.

Die Erfindung ist nicht auf die dargestellten Ausführungsformen des erfindungsgemäßen Verfahrens zur Übertragung von Zapping-Daten beschränkt. Von der Erfindung ist insbesondere auch die Übetragung von Zapping-Daten zu mehr als zwei Programmen bzw. Services und die Übertragung in vom DVB-H- oder ATSC-Übertragungsstandard verschiedenen, insbesondere zukünftig verwendeten digitalen Fernseh-Übertragungsstandards abgedeckt.

## Patentansprüche

1. Verfahren zur Übertragung von Zapping-Daten, die jeweils zu in einer ersten Datenrate in periodisch wiederholten Burstintervallen *(*Δ*t_{A}*,Δ*t_{B}*) eines digitalen Fernseh-übertragungssystems jeweils übertragenen Programmen gehören und in Zeitintervallen (Δ*t*_{1*A*},Δ*t*_{1*B*};Δ*t*_{4*A*},Δ*t*_{4*B*}) zwischen den zum zugehörigen Programm jeweils gehörigen Burstintervallen (Δ*t_{A}*,Δ*t_{B}*) übertragen werden,
wobei die Zapping-Daten in einer von der ersten Datenrate der einzelnen Bursts unterschiedlichen zweiten Datenrate übertragen werden,
**dadurch gekennzeichnet,**
**dass** die Zapping-Daten in einem vom ersten Frequenzbereich der einzelnen Bursts unterschiedlichen zweiten Frequenzbereich kontinuierlich in einem ersten Zeitintervall *(*Δ*t*₁*_{A},*Δ*t*_{1*B*}) übertragen werden, das einzig zwischen den zum zugehörigen Programm gehörigen einzelnen Burstintervallen *(*Δ*t_{A}*,Δ*t_{B}*) positioniert ist.

2. Verfahren zur Übertragung von Zapping-Daten nach Anspruch 1,
**dadurch gekennzeichnet,**
**dass** das digitale Fersehübertragungssystem ein nach dem Digital.-Video-Broadcast-Handheld-Übertragungsstandard (DVB-H) oder ein nach dem Advanced-Television-Systems-Committee-Übertragungsstandard (ATSC) ausgerichtetes digitales Fernsehübertragungssystem ist.

3. Verfahren zur Übertragung von Zapping-Daten nach Anspruch 1 oder 2,
**dadurch gekennzeichnet,**
**dass** die Bandbreite der für Zapping-Daten vorgesehenen zweiten Datenrate deutlich niedriger als die zur ersten Datenrate gehörige Bandbreite ist.

4. Verfahren zur Übertragung von Zapping-Daten nach Anspruch 1,
**dadurch gekennzeichnet,**
**dass** das erste Zeitintervall (Δ*t*_{1*A*},Δ*t*_{1*B*}) gegenüber dem Ende des jeweils vorherigen Burstintervalls (Δ*t_{A}*,Δ*t_{B}*) verzögert um ein zweites Zeitintervall (Δ*t*_{2*A*},Δ*t*_{2*B*}) beginnt und gegenüber dem Beginn des jeweils nachfolgenden Burstintervalls (Δ*t_{A}*,Δ*t_{B}*) vorzeitig um ein drittes Zeitintervall (Δ*t*_{3*A*},Δ*t*_{3*B*}) endet.

5. Sendevorrichtung zur Übertragung von Zapping-Daten, die jeweils zu in einer ersten Datenrate in periodisch wiederholten Burstintervallen (Δ*t_{A}*,Δ*t_{B}*) eines digitalen Fernseh-Übertragungssystems jeweils übertragenen Programmen gehören und in Zeitintervallen (Δ*t*_{1*A*},Δ*t*_{1*B*};Δ*t*_{4*A*},Δ*t*_{4*B*}) zwischen den zum zugehörigen Programm jeweils gehörigen Burstintervallen (Δ*t_{A}*,Δ*t_{B}*) übertragen werden,
wobei die Zapping-Daten in einem von der ersten Datenrate der einzelnen Bursts unterschiedlichen zweiten Datenrate übertragen werden,
**dadurch gekennzeichnet,**
**dass** die Zapping-Daten in einem vom ersten Frequenzbereich der einzelnen Bursts unterschiedlichen zweiten Frequenzbereich kontinuierlich in einem ersten Zeitintervall (Δ*t*_{1*A*},Δ*t*_{1*B*}) übertragen werden, das einzig zwischen den zum zugehörigen Programm gehörigen einzelnen Burstintervallen (Δ*t_{A}*,Δ*t_{B}*) positioniert ist.

6. Sendevorrichtung zur Übertragung von Zapping-Daten nach Anspruch 5,
**dadurch gekennzeichnet,**
**dass** das digitale Fersehübertragungssystem ein nach dem Digital-Video-Broadcast-Handheld-Übertragungsstandard (DVB-H) oder ein nach dem Advanced-Television-Systems-Committee-Übertragungsstandard (ATSC) ausgerichtetes digitales Fernsehübertragungssystem ist.

7. Sendevorrichtung zur Übertragung von Zapping-Daten nach Anspruch 5 oder 6,
**dadurch gekennzeichnet,**
**dass** die Bandbreite der für Zapping-Daten vorgesehenen zweiten Datenrate deutlich niedriger als die.zur ersten Datenrate gehörige Bandbreite ist.

8. Sendevorrichtung zur Übertragung von Zapping-Daten nach einem Anspruch 5,
**dadurch gekennzeichnet,**
**dass** das erste Zeitintervall (Δ*t*_{1*A*},Δ*t*_{1*B*}) gegenüber dem Ende des jeweils vorherigen Burstintervalls (Δ*t_{A}*,Δ*t_{B}*) verzögert um ein zweites Zeitintervall (Δ*t*_{2*A*},Δ*t*_{2*B*}) beginnt und gegenüber dem Beginn des jeweils nachfolgenden Burstintervalls (Δ*t_{A},*Δ*t_{B}*) vorzeitig um ein drittes Zeitintervall (Δ*t*_{3*A*},Δ*t*_{3*B*}) endet.

## Claims

1. Method for the transmission of zapping data, which are associated in each case with channels transmitted respectively at a first data rate in periodically-repeated burst intervals (Δt_{A}, Δt_{B}) of a digital television transmission system and which are transmitted at time intervals (Δt_{1A}, Δt_{1B}; Δt_{4A}, Δt_{4B}) between the burst intervals (Δt_{A}, Δt_{B}) associated with the respective channel,
wherein the zapping data are transmitted at a second data rate different from the first data rate of the individual bursts,
**characterised in that**
the zapping data in a second frequency range different from the first frequency range of the individual bursts are transmitted continuously within a first time interval (Δt_{1A}, Δt_{1B}) which is positioned only between the individual burst intervals (Δt_{A}, Δt_{B}) associated with the respective channel.

2. Method for the transmission of zapping data according to claim 1,
**characterised in that**
the digital television transmission system is a digital television transmission system set up according to the Digital-Video-Broadcast-Handheld transmission standard (DVB-H) or according to the Advanced-Television-Systems-Committee transmission standard (ATSC).

3. Method for the transmission of zapping data according to claim 1 or 2,
**characterised in that**
the bandwidth of the second data rate provided for the zapping data is significantly lower than the bandwidth associated with the first data rate.

4. Method for the transmission of zapping data according to claim 1,
**characterised in that**
the first time interval (Δt_{1A}, Δt_{1B}) begins delayed by a second time interval (Δt_{2A}, Δt_{2B}) by comparison with the end of the respectively previous burst interval (Δt_{A}, Δt_{B}) and ends prematurely by a third time interval (Δt_{3A}, Δt_{3B}) by comparison with the beginning of the respectively subsequent burst interval (Δt_{A}, Δt_{B}).

5. Transmission device for the transmission of zapping data which are associated in each case with channels transmitted respectively at a first data rate in periodically repeated burst intervals (Δt_{A}, Δt_{B}) of a digital television transmission system and which are transmitted at time intervals (Δt_{1A}, Δt_{1B}; Δt_{4A}, Δt_{4B}) between the burst intervals (Δt_{A}, Δt_{B}) associated with the respective channel,
wherein the zapping data are transmitted at a second data rate different from the first data rate of the individual bursts,
**characterised in that**
the zapping data in a second frequency range different from the first frequency range of the individual bursts are transmitted continuously within a first time interval (Δt_{1A}, Δt_{1B}) which is positioned only between the individual burst intervals (Δt_{A}, Δt_{B}) associated with the respective channel.

6. Transmission device for the transmission of zapping data according to claim 5,
**characterised in that**
the digital television transmission system is a digital television transmission system set up according to the Digital-Video-Broadcast-Handheld transmission standard (DVB-H) or according to the Advanced-Television-Systems-Committee transmission standard (ATSC).

7. Transmission device for the transmission of zapping data according to claim 5 or 6,
**characterised in that**
the bandwidth of the second data rate provided for the zapping data is significantly lower than the bandwidth associated with the first data rate.

8. Transmission device for the transmission of zapping data according to a claim 5,
**characterised in that**
the first time interval (Δt_{1A}, Δt_{1B}) begins delayed by a second time interval (Δt_{2A}, Δt_{2B}) by comparison with the end of the respectively previous burst interval (Δt_{A}, Δta) and ends prematurely by a third time interval (Δt_{3A}, Δt_{3B}) by comparison with the beginning of the respectively subsequent burst interval (Δt_{A}, Δt_{B}).

## Revendications

1. Procédé pour la transmission de données de changement de chaîne, qui appartiennent respectivement à des programmes transmis respectivement à un premier débit de données dans des intervalles de rafales répétés périodiquement (Δt_{A}, Δt_{B}) d'un système de transmission de télévision numérique et sont transmises dans des intervalles de temps (Δt_{1A}, Δt_{1B}; Δt_{4A}, Δt_{4B}) entre les intervalles en rafales (Δt_{A}, Δt_{B}) appartenant respectivement au programme associé,
dans lequel les données de changement de chaîne sont transmises dans un second débit de données différent du premier débit de données des différentes rafales,
**caractérisé en ce que**
les données de changement de chaîne dans un second domaine fréquentiel différent du premier domaine fréquentiel des différentes rafales sont transmises continûment dans un premier intervalle de temps (Δt_{1A}, Δt_{1B}), qui est positionné uniquement entre les différents intervalles de rafales (Δt_{A}, Δt_{B}) appartenant au programme associé.

2. Procédé pour la transmission de données de changement de chaîne selon la revendication 1, **caractérisé en ce que**
le système de transmission de télévision numérique est un système de transmission de télévision numérique orienté selon le standard Digital Video Broadcast Handheld (DVB-H) ou le standard de transmission Advanced Télévision Systems Committee (ATSC).

3. Procédé pour la transmission de données de changement de chaîne selon la revendication 1 ou 2,
**caractérisé en ce que**
la largeur de bande du second débit de données prévu pour les données de changement de chaîne est clairement plus étroite que la largeur de bande associée au premier débit de données.

4. Procédé pour la transmission de données de changement de chaîne selon la revendication 1, **caractérisé en ce que**
le premier intervalle de temps (Δt_{1A}, Δt_{1B}) commence par rapport à la fin de l'intervalle de rafales précédent respectif (Δt_{A}, Δt_{B}) retardé d'un second intervalle de temps (Δt_{2A}, Δt_{2B}) et se termine par rapport au début de l'intervalle de rafales suivant respectif (Δt_{A}, Δt_{B}) prématurément à un troisième intervalle de temps (Δt_{3A}, Δt_{3B}).

5. Dispositif d'émission pour la transmission de données de changement de chaîne, qui appartiennent respectivement à des programmes transmis respectivement dans un premier débit de données dans des intervalles de rafales répétés périodiquement (Δt_{A}, Δt_{B}) d'un système de transmission de télévision numérique et sont transmises dans des intervalles de temps (Δt_{1A}, Δt_{1H} ; Δt_{4A}, Δt_{4B}) entre les intervalles de rafales (Δt_{A}, Δt_{B}) appartenant respectivement au programme associé,
dans lequel les données de changement de chaîne sont transmises dans un second débit de données différent du premier débit de données des différentes rafales,
**caractérisé en ce que**
les données de changement de chaîne dans un second domaine fréquentiel différent du premier domaine fréquentiel des différentes rafales sont transmises continûment dans un premier intervalle de temps (Δt_{1Af}, Δt_{1B}), qui est positionné uniquement entre les différents intervalles de rafales (Δt_{A}, Δt_{B}) appartenant au programme associé.

6. Dispositif d'émission pour la transmission de données de changement de chaîne selon la revendication 5, **caractérisé en ce que**
le système de transmission de télévision numérique est un système de transmission de télévision numérique orienté selon le standard de transmission Digital Video Broadcast Handheld (DVB-H) ou selon le standard de transmission Advanced Télévision Systems Committee (ATSC).

7. Dispositif d'émission pour la transmission de données de changement de chaîne selon la revendication 5 ou 6, **caractérisé en ce que**
la largeur de bande du second débit de données prévu pour les données de changement de chaîne est clairement plus étroite que la largeur de bande associée au premier débit de données.

8. Dispositif d'émission pour la transmission de données de changement de chaîne selon la revendication 5, **caractérisé en ce que**
le premier intervalle de temps (Δt_{1A}, Δt_{1B}) commence par rapport à la fin de l'intervalle de rafales précédent respectif (Δt_{A}, Δt_{B}) retardé d'un second intervalle de temps (Δt_{2A}, Δt_{2B}) et se termine par rapport au début de l'intervalle de rafales suivant respectif (Δt_{A}, Δt_{B}) prématurément à un troisième intervalle de temps (Δt_{3A}, Δt_{3B}).
